# EUROPEAN PATENT SPECIFICATION

(11) **EP 0 280 504 B1**
(45) Date of publication and mention of the grant of the patent: **25.10.1995**
(21) Application number: 88301515.8
(22) Date of filing: 23.02.1988
(51) Int. Cl.: A01M 23/30

(54) **Mouse and rat trap**
Maus- und Rattenfalle
Piège pour souris et rats

(30) Priority: 24.02.1987 US 17597
(43) Date of publication of application: 31.08.1988
(73) Proprietor: Vajs, Lubomir, Toronto Ontario M1B 2L3 (CA); Vajs, Helena, Toronto Ontario M1B 2L3 (CA)
(72) Inventor: Vajs, Lubomir, Toronto Ontario M1B 2L3 (CA); Vajs, Helena, Toronto Ontario M1B 2L3 (CA)
(74) Representative: Mommaerts, Johan Hendrik, Dipl.-Phys.

(56) References cited:
- CA-A- 1 139 562
- DE-A- 2 623 394
- US-A- 1 422 049
- US-A- 2 174 929
- US-A- 2 590 316
- US-A- 2 724 209
- US-A- 2 778 149

## Description

The invention relates to a mouse or rat trap as defined in the preamble of claim 1.

Mouse traps of this kind are known from US-A 2 174 929 (1937) and DE-A 2 623 394 (1977).

The invention provides an improved mouse trap of the kind specified above as defined in the characterising portion of claim 1.

In particular the large opening angle allows the striker to be accelerated over a relatively long angular path, so that the spring can be made weaker accordingly, which facilitates the opening of the trap.

CA-A-1 139 929 shows a mouse trap made of card-board, and the spring is formed by a rubber band as generally used for closing parcels and the like. The closing force exerted by such a band depends on the manner in which it is applied, and, moreover, the elastic force of rubber bands will depend on the length and age thereof, so that, in practice, the forces obtained with such bands will widely vary. Furthermore the striker is provided with a latching tongue engaging a hole in the bait holder, which mechanism is liable to malfunctioning. Furthermore it is not kept in an over-centre position in respect of the band, which will make it more difficult to keep the trap open when applying the bait.

The invention is shown in the drawings wherein:
Figure 1 is a perspective view of the trap;
Figure 2 is a perspective view of a vertical section of the trap;
Figure 3 is a side elevation of Figure 5;
Figure 4 shows the trap of figure 1 where the striker moves past the center position
Figures 5 and 6 are side elevations showing the relationship between the striker and the base and the various hinge points to accomplish the modified structure of Figure 4.

The trap generally shown as 2 in the drawings, is suitable for catching a mouse or rat or other small type animal and is designed to kill the same.

The trap shown is for mice and a larger, stronger version is required for rats. For example, the rat version would be larger and the spring stronger. For simplicity the invention will be described with respect to the mouse trap version, however, the overall structure and cooperation of components work satisfactorily for larger traps.

The striker 4, has a downwardly extending striking edge 6 adjacent the forward portion of the striker and is biased by extension spring 14. Journals 8 of the striker are pivotally received in bearing portions of the base 20.

The base 20 has a forward edge 22 for cooperating the striking edge 6 of the striker, and act as the active surfaces which will result in the animal being killed. The base 20 of the trap has a full floor portion 26 and at the rear thereof bearing-type blocks 32 are provided for receiving the stub shafts 34 of the actuator 40. At the forward end of the base, stop posts 24 are provided which limit the downward movement of the striker 4. The upper surface of these posts 24 engage the striking edge 6 to thereby determine and end position of the striker.

The actuator 40 has a front portion 42 which includes the bait recess area 44 having a raised lip region 45 thereabout. A permanent bait may be placed in the recess 44 or a small portion of cheese or other bait can be added. As the mouse enters the mouth of the trap adjacent the forward portion of the base 4, the actuator is upwardly angled and the mouse or rat, attracted by the bait, depresses the actuator 40 causing the same to release the striker to rapidly move towards the forward portion of the base 20 killing the mouse or rat.

The striker, the actuator and base are all separately molded plastic pieces and basically snap-fit together. The trap is inexpensive to produce, easily set and not unduly complicated.

The helical extension spring 14, preferably of metal, is disposed between the base 20 and the striker 4 for urging the striker towards a closed position, with edge 6 of the striker in engagement with or in close proximity to edge 22 of the base 20.

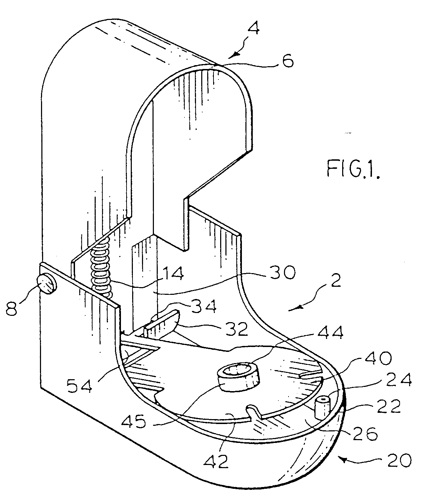

As shown in Figure 1, the actuator 40 includes a ported area 54 through which the extension spring 14 extends to engage the base 20 at position 15. This ported area allows the actuator to freely move and also allows the spring to move as required to effect the desired movement of striker 14.

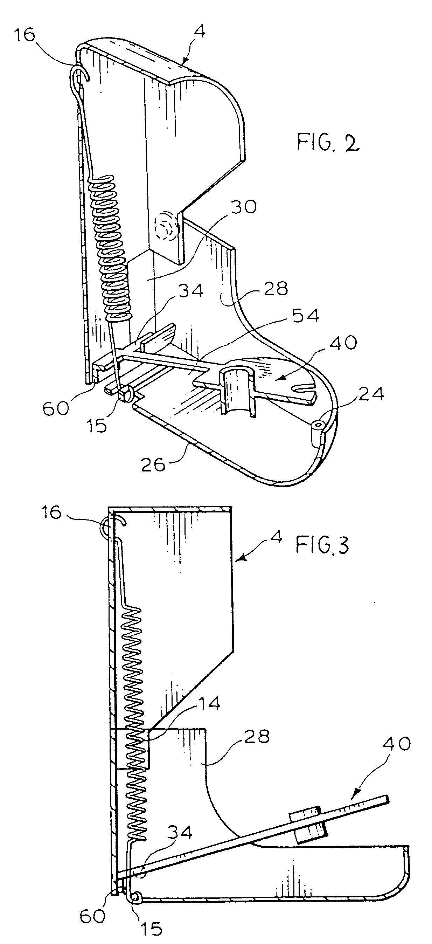

The trap as shown in Figure 2 where the actuator includes a downwardly extending flange 60 rearward of the stub shafts 34, and this downwardly extending flange 60 acts both as a stop for the striker 4 and as a lever when the actuator is depressed for urging the striker through the center position such that the spring will cause the striker to move to the closed position.

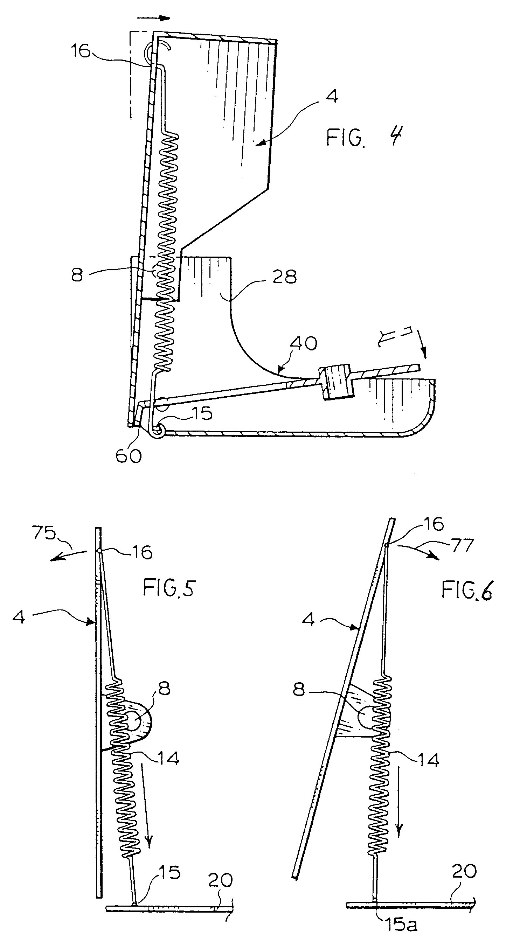

In the structure of Figure 2, the striker 4 is moved past the over center position, such that extension spring 14 serves to cause the striker to rotate about journals 8 and cause engagement of the rear portion of the striker with downwardly extending flange 60. Thus, the spring 14 causes the striker to be maintained in the set position. In the set position, the front portion of actuator 40 is raised and when a mouse enters the trap and attempts to take the bait from the bait holder, the weight of the mouse will cause rotation of the actuator about stub shafts 34, causing flange 60 to act as a lever and rotate the striker through the center position (very little additional force is required to effect the extension of the spring) whereupon the spring 14 now biases and accelerates the striker to the closed position. The details of the movement of the striker from the set position of Figure 2 and 3 to the closed position can be appreciated from a review of Figure 4, where flange 60 has caused the striker to move through the center position whereupon the spring urges the striker to the closed position.

Figure 5 schematically shows the relationship between the striker 4, the journals 8, the base 20 and the extension spring 14 secured to the base at 15 and to the striker at 16. As can be seen, the striker 4 has been rotated such that a line drawn through point 15 and the center of journals 8 do not align with securement point 16. In fact, point 16 has rotated through the center position or point of maximum spring extension such that spring 14 is now urging the striker in the direction of arrow 75. This relationship ensures that the striker is maintained in the set position and will be in engagement with the downwardly extending flange 60 which acts as stop for the striker and causes a raising of the forward portion of the striker. It can be appreciated that other surfaces could provide the stop face, such as an extension of the base, while still causing the actuator to appropriately move to automatically set and when depressed move the striker through the over center position.

In Figure 6, the actuator (not shown) has caused the striker to move through the center position (point 16 is now forward of the point where the spring force is aligned with a line through 15 and journals 8) and extension spring 14 now will rapidly move the striker to the non-operative position as indicated by arrow 77.

The trap of Figures 1 through 6 operates on the principle that the cooperation between the actuator and striker, which maintains the striker in the set position, results in a relatively low load placed on the lock mechanism to render the tripping mechanism sensitive. This is accomplished as the extension spring goes through a position where substantially the major component of spring force is along a line defined by the journals of the striker and the point of securement of the spring to the base. Any components of the spring force in other directions, which are carried by the lock mechanism, are low.

## Claims

1. A mouse or a rat trap, comprising:
- A base (26) and a striker (4), each having a first and a second extremity, said striker (4) being connected between its first and second extremities (16,) with the base (26) by means of a first hinge axis (8), allowing the striker (4) to be moved between a closed and an open position in respect of the base (26);
- a tension spring (14) attached to the striker (4) near its first end (16) and to a point (15) of the base (26) below said first hinge axis (8), so that, when moving the striker (4) towards the open position, this spring (14) is tensioned and finally passes said first hinge axis (8) towards an over-centre condition;
- stop means defining the open position with the spring (14) tensioned in its over-centre condition;
- an actuator (40) having a first and a second extremity connected to the base by means of a second hinge axis (34), a bait holder (44) being provided thereon between the first extremity and the second hinge axis (34), the second extremity of said actuator being situated near said second hinge axis (34); and
- the second extremities of said striker (4) and said actuator (40) contacting each other in the open position of the striker, and, when moving the actuator (40) downwards, the second extremity thereof forcing the second extremity of the striker (4) so far that the spring (14) will pass the first hinge axis (8) and will force the striker (4) towards the closed position, wherein
- in the open position, the actuator (40) defines with the striker (4) an angle of less than 90°, and the second extremity of the actuator (40) acts, in the open position, as the stop means; and
- the short arm of the actuator between the second extremity and the second hinge axis (34) is so that, when moving the actuator (40) downwards, this second extremity forces the second extremity of the striker (4) sufficiently for initiating the closing movement thereof until the spring (14) passes the first hinge axis (8), and, when moving the striker (4) towards the open position and tensioning the spring (14), the second extremity of the actuator (40) is in the path of the second extremity of the striker (4), so as to push the second extremity of the actuator (40) towards the position in which this extremity acts as said stop means, characterized in that:
- in the open position, the back of the striker (4) and the bottom of the base (26) define an angle in the vicinity of a right angle.

2. The trap according to claim 1, characterized in that the second extremity of the actuator (40) comprises a downwardly extending flange (60) contacting the second extremity of the striker (4) in its open position.

## Patentansprüche

1. Mause- oder Rattenfalle, mit:
- einem Unterteil (26) und einem Schlagelement (4), die jeweils mit einem ersten und einem zweiten Ende versehen sind, wobei das Schlagelement (4) zwischen seinem ersten und zweiten Ende (16) mit dem Unterteil (26) mittels einer ersten Scharnierachse (8) verbunden ist, wodurch das Schlagelement (4) zwischen einer geschlossenen und einer offenen Position bezüglich des Unterteils (26) bewegt werden kann;
- einer am Schlagelement (4) nahe dessen ersten Ende (16) und an einem Punkt (15) des Unterteils (26) unterhalb der besagten ersten Scharnierachse (8) befestigten Spannfeder (14), so daß bei Bewegung des Schlagelementes (4) zur offenen Position hin diese Feder (14) gespannt wird und schließlich die besagte erste Scharnierachse (8) zu einem überzentrischen Endlagenzustand hin passiert;
- Anschlagmitteln, die die offene Position bei Spannung der Feder (14) in deren überzentrischen Endlagenzustand definieren;
- einem Betätiger (40) mit einem ersten und einem zweiten Ende, der am Unterteil mittels einer zweiten Scharnierachse (34) verbunden ist, einem darauf zwischen dem ersten Ende und der zweiten Scharnierachse (34) angeordneten Köderhalter (44), wobei das zweite Ende des besagten Betätigers sich nahe der besagten zweiten Scharnierachse (34) befindet; und
- wobei die zweiten Enden des besagten Schlagelementes (4) und des besagten Betätigers (40) sich in der offenen Position des Schlagelementes berühren und wobei das zweite Ende des Betätigers (40) bei dessen Bewegung nach unten das zweite Ende des Schlagelementes (4) so weit drückt, daß die Feder (14) die erste Scharnierachse (8) passiert und das Schlagelement (4) zur geschlossenen Position hin bewegt,
- wobei in der offenen Position der Betätiger (40) mit dem Schlagelement (4) einen Winkel weniger als 90° definiert, und das zweite Ende des Betätigers (40) im offenen Zustand als Anschlagmittel dient; und
- wobei der kurze Arm des Betätigers zwischen dem zweiten Ende und der zweiten Scharnierachse (34) derart ausgebildet ist, daß bei Bewegung des Betätigers (40) nach unten dieses zweite Ende das zweite Ende des Schlagelementes (4) in ausreichendem Maß drückt, um dessen Schließbewegung zu bewirken, bis die Feder (14) die erste Scharnierachse (8) passiert, und daß bei Bewegung des Schlagelementes (4) zur offenen Position hin und Spannen der Feder (14) das zweite Ende des Betätigers (40) sich im Weg des zweiten Endes des Schlagelementes (4) befindet, um so das zweite Ende des Betätigers (40) zu der Position hin zu drücken, in der dieses Ende als das besagte Anschlagmittel wirkt,
dadurch gekennzeichnet, daß in der offenen Position das Hinterteil des Schlagelementes (4) und der Boden des Unterteils (26) einen Winkel in der Nähe eines rechten Winkels definieren.

2. Falle nach Anspruch 1,
dadurch gekennzeichnet, daß das zweite Ende des Betätigers (40) einen nach unten weisenden Flansch (60) aufweist, der das zweite Ende des Schlagelementes (4) in dessen offener Position kontaktiert.

## Revendications

1. Piège à souris ou à rat, comprenant :
- une base (26) et une mâchoire (4), chacun présentant une première et une deuxième extrémité, ladite mâchoire (4) étant reliée entre ses première et deuxième extrémités (16) à la base (26) au moyen d'un premier axe (8) d'articulation, permettant à la mâchoire (4) d'être déplacée entre une position fermée et une position ouverte par rapport au support (26) ;
- un ressort tendeur (14) relié à la mâchoire (4) près de sa première extrémité (16) et à un point (15) de la base (26) en dessous dudit premier axe (8) d'articulation, de sorte que, lorsque la mâchoire (4) est déplacée en direction de la position ouverte, ce ressort (14) se tend et dépasse finalement ledit premier axe (8) d'articulation dans un état de dépassement de centre ;
- un moyen de butée définissant la position ouverte, le ressort (14) étant tendu dans son état de dépassement de centre ;
- un dispositif actionneur (40) présentant une première et une deuxième extrémités reliées au support au moyen d'un deuxième axe (34) d'articulation, un support (44) pour appât étant disposé sur celui-ci entre la première extrémité et le deuxième axe (34) d'articulation, la deuxième extrémité dudit dispositif actionneur étant située près dudit deuxième axe (34) d'articulation ; et
- les deuxièmes extrémités de ladite mâchoire (4) et du dispositif actionneur (40) étant en contact mutuel dans la position ouverte de la mâchoire, et, lors du déplacement du dispositif actionneur (40) vers le bas, la deuxième extrémité de celui-ci forçant la deuxième extrémité de la mâchoire (4) au point que le ressort (14) va dépasser le premier axe (8) d'articulation et va forcer la mâchoire (4) à passer dans la position fermée, dans lequel
- dans la position ouverte, le dispositif actionneur (40) forme avec la mâchoire (4) un angle de moins de 90°, et la deuxième extrémité du dispositif actionneur (40) constitue, dans la position ouverte, le moyen de butée ; et
- le bras court du dispositif actionneur entre la deuxième extrémité et le deuxième axe (34) d'articulation est tel que, lors du déplacement du dispositif actionneur (40) vers le bas, cette deuxième extrémité force la deuxième extrémité de la mâchoire (4) suffisamment pour amorcer son mouvement de fermeture jusqu'à ce que le ressort (14) dépasse le premier axe (8) d'articulation, et, lorsque la mâchoire (4) est déplacée en direction de la position ouverte et que le ressort (14) se tend, la deuxième extrémité du dispositif actionneur (40) est sur la trajectoire de la deuxième extrémité de la mâchoire (4), de façon à pousser la deuxième extrémité du dispositif actionneur (40) en direction de la position dans laquelle cette extrémité constitue ledit moyen de butée, caractérisé en ce que :
- dans la position ouverte, le dos de la mâchoire (4) et le fond de la base (26) forment un angle voisin d'un angle droit.

2. Piège selon la revendication 1, caractérisé en ce que la deuxième extrémité du dispositif actionneur (40) comprend un rebord (60) s'étendant vers le bas en contact avec la deuxième extrémité de la mâchoire (4) dans sa position ouverte.
